# EUROPEAN PATENT SPECIFICATION

(11) **EP 1 895 632 B1**
(45) Date of publication and mention of the grant of the patent: **19.10.2011**
(21) Application number: 07075736.4
(22) Date of filing: 29.08.2007
(51) Int. Cl.: H02G 3/12

(54) **Box for fastening in a hole in a hollow wall**
Dose für ein in einer Trockenbauwand ausgebildetes Loch
Boîtier à fixer dans un trou de cloison sèche

(30) Priority: 31.08.2006 NL 1032394
(43) Date of publication of application: 05.03.2008
(73) Proprietor: Attema B.V., 4203 NJ Gorinchem (NL)
(72) Inventor: de Hoog, Antonie, 4213 DE Dalem (NL)
(74) Representative: Mertens, Hans Victor

(56) References cited:
- EP-A1- 0 875 974
- NL-A- 7 810 097
- US-A1- 4 972 044

## Description

The invention relates to a box according to the preamble to claim 1. More particularly, the box is suitable for fitting in a hollow wall and the box is also suitable for allowing materials of an electrical installation to be fitted into it.

From NL7810097, in the name of the Applicant, two embodiments of a box of the abovementioned kind are known.

According to a first of the embodiments known from NL7810097, the box comprises a nozzle part that is only pivotable via a hinge fitted in the side wall of the box and having an axis parallel to the bottom of the box. Prior to placement of the box in a hollow wall, the nozzle part is in a folded-in position inside the box. Before the box is placed in the wall, a tube, generally a flexible tube, is pulled out of the wall over a suitable length via a hole in the wall and inserted via an opening in the bottom of the box into the nozzle of the nozzle part. Then the box is placed in the hole and fastened to the wall. After the box has been placed in the hole, the nozzle part is pushed against, whereby it pivots outwards via the opening in the bottom of the box. Then a loose bottom is placed on the bottom of the box, so that the opening in the bottom of the box is covered and the nozzle part is prevented from being accidentally pivoted back into the box.

After the box has been placed in the wall, and the tube has thus been pushed back into the wall, whereafter the tube generally presses against insulation material, the tube exerts a substantial force upon the nozzle part. As a result, the loose bottom can accidentally be forced back inwards, whereby the configuration is disturbed, the nozzle part can press against electrical installation material in the box and can hereupon damage the installation material, and the sealing of the bottom no longer meets the set requirements. This situation can arise all the more easily because the bottom of the box is generally in a vertical plane and the tube projects into the nozzle from above. Another drawback is that the box in fact consists of an assembly of two components, namely the actual box with integrated nozzle part and the loose bottom, which must be separately produced, thereby raising the cost price, and increasing the time and costs of the logistics invested therein. Another drawback is that, following placement of the box in the wall and when the tube possibly exerts a small force upon the nozzle part, it is difficult to pivot the nozzle part back into the box, whilst this is sometimes required as the box and the electrical material are being installed.

According to a second embodiment according to NL7810097, the nozzle part has a bottom portion that connects to the fixed part of the bottom of the box and is integrated therewith. The bottom portion of the nozzle part has two hinges having axes which are parallel to the axis of the hinge in the side wall of the box. The bottom portion of the nozzle part can hence be folded inwards into the box. The force which is required for this is substantial. In many cases, therefore, the use of a loose bottom according to the first embodiment can be dispensed with. The second embodiment has the drawback that, following placement of the box into the wall, the nozzle part can be even more difficult than in the first embodiment to pivot back into the box, since the substantial force for folding the bottom portion of the nozzle part must now also be overcome.

The pivoting of the nozzle part back into the box could be facilitated by providing the nozzle part inside the box with a member by which a user can pull the nozzle part into the box. Such a member is known per se from NL1000985. The box which is known per se from NL1000985 comprises, however, no nozzle part integrated with the box, but instead a loose nozzle part is used that can be stuck through an opening in a side wall of the box, after which it can be coupled to the wall and the bottom of the box by means of a snap connection. The document describes various embodiments. In all cases, however, it is very difficult in practice to pull a tube through the opening in the side wall of the box, insert it into the nozzle part, place the assembly into the hole of the hollow wall, and afterwards push the nozzle part, with the tube stuck in it, sufficiently far back through the side wall of the box that the snap coupling is effected. Furthermore, this box has the aforementioned drawbacks with regard to the production and the logistics of using loose components.

From NL8403068, a box according to the preamble to claim 1 is known, which differs from the above-described first embodiment of a box according to NL7810097 by the fact that the bottom portion of the box, that does not belong to the nozzle part, is provided with a flap which, via a hinged portion, is integrated with that bottom portion. The flap is capable, when the nozzle part is pivoted sufficiently far out of the interior of the box that the bottom portions are running substantially parallel, of being able to be tilted down in order to seal a remaining opening in the bottom, whereupon a cam formed on the free end of the flap engages in an opening in the nozzle part and thereby secures the nozzle part in this position. The injection moulding of such a box requires relatively intricate dies and the installation thereof calls for complex handling.

The fitting, in particular by means of injection moulding, of a pull member known from NL1000985 on the bottom portion of the nozzle part of a box according to said second embodiment according to NL7810097 or according to NL8403068, with which the bottom of the box can also be fully closed, as required, would be extremely difficult and hence too expensive.

An object of the invention is to provide a box of the kind stated in the introduction, without the drawbacks of the prior art.

For the achievement of the said object, the invention provides at least a box as described in claim 1. The production of the nozzle part, particularly by means of injection moulding, can hence be carried out together with the rest of the box but outside the rest of the box, after which the nozzle part is pivoted fully inwards into the rest of the box. Hence, the box is relatively simple and cheap to produce and the storage and handling thereof are simplified. During the installation of the box into a hollow wall and after, from the wall, a tube has been inserted into the nozzle of the nozzle part, the nozzle part can be easily pivoted outwards, after which it is secured in an end position. The installation of the box into a hole in the wall, together with a tube pulled out of the hole and inserted into the nozzle of the nozzle part, is thereby facilitated.

Other characteristics and advantages of the box according to the invention will become clear from the following description of an embodiment of a box according to the invention with reference to the appended drawing, wherein:
Fig. 1 shows in perspective and in half section a box according to the invention, with the nozzle part thereof in a position realized directly after production thereof;
Fig. 2 shows in perspective and in half section the box of Fig. 1, with the nozzle part thereof in a position realized for storage of the box,
Fig. 3 shows in perspective and in half section the box of Fig. 1, with the nozzle part thereof in a position realized following installation of the box in a wall; and
Fig. 4 shows in perspective a cut-out portion of the box of Fig. 1, at a transition between a wall portion and a bottom portion of the nozzle part of the box.

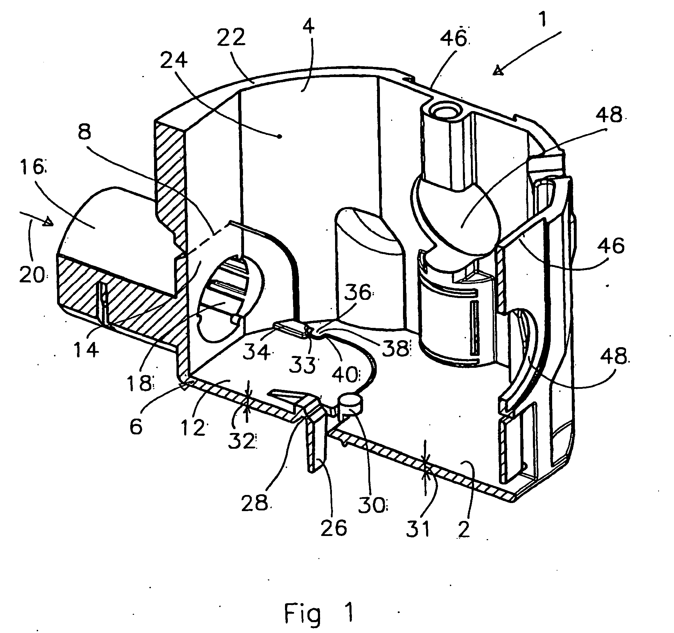

Figs. 1, 2 and 3 show one half of a box 1 according to the invention, the box 1 having been cut through along a plane of symmetry perpendicular to a bottom portion 2 of the box 1.

The box 1 comprises, in addition to the bottom portion 2, a wall portion 4, which is perpendicular to the bottom portion 2 and which can have an essentially cylindrical shape.

The box 1 additionally comprises a nozzle part 6, which, via a flexible portion, hereinafter referred to as hinge 8, is integrated with the rest of the box 1. The axis of the hinge 8 runs parallel to the bottom portion 2 of the box 1.

The nozzle part 6 comprises a portion 12 which is capable of, together with the bottom portion 2, completing the bottom of the box 1.

The nozzle part 6 also comprises a portion 14, which is capable of, together with the wall portion 4, completing the wall of the box 1.

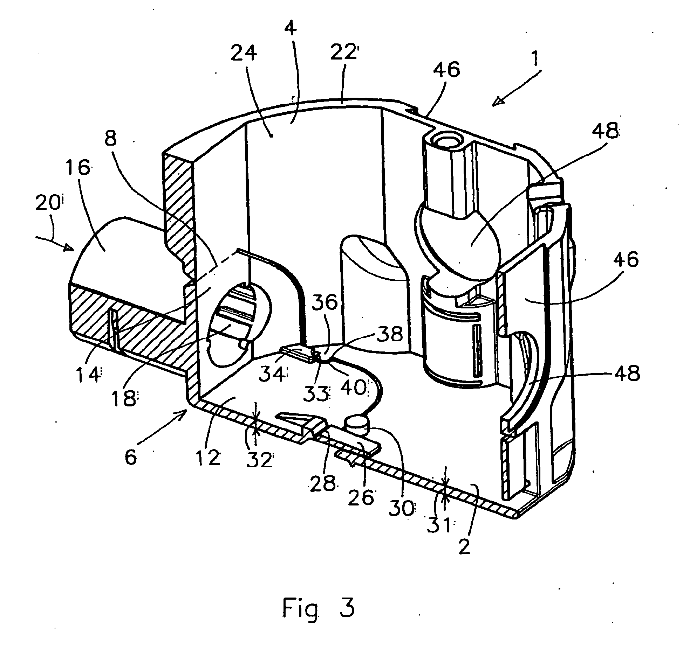

The nozzle part 6 further comprises a nozzle 16, which extends from an outer edge of the movable wall portion 14. The nozzle 16 has a passage 18, which is suitable for allowing a tube (not shown), in particular a flexible tube, of an electrical installation to be inserted into it in a direction denoted by the arrow 20 in Figs. 1 and 3.

The fixed wall portion 4 of the box 1 has a free edge 22 at a distance from the fixed bottom portion 2. The edge 22 delimits, opposite to the fixed bottom portion 2 of the box 1, an open side of a space 24 of the box 1. After the box 1 has been placed in a wall, components of an electrical installation, such as switches and connecting sockets, can be fitted via the open side in the space 24.

At a free edge of the bottom portion 12, and preferably at a greatest possible distance from the nozzle 16, the bottom portion 12 of the nozzle part 6 has a lip 26, which, via an elastic portion, hereinafter referred to as hinge 28, merges into the bottom portion 12 and is integrated therewith. The lip 26 makes it possible, by pulling on the lip 26, to pivot the nozzle part 6 from the position shown in Fig. 3 back into the space 24.

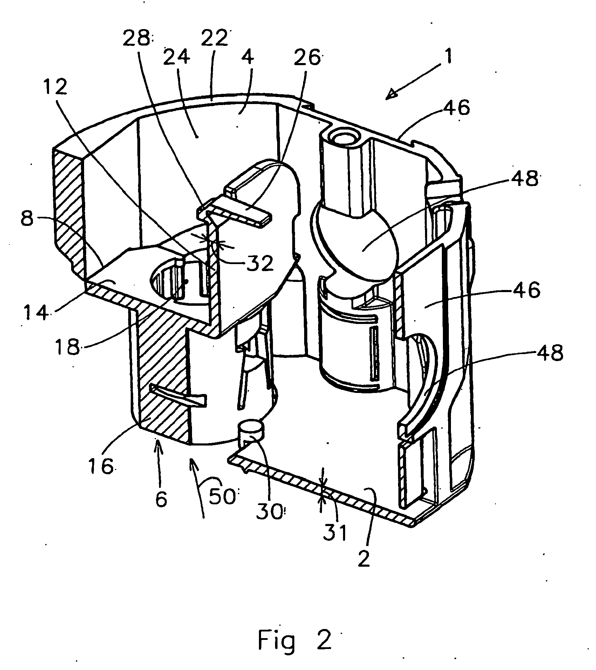

In the configuration shown in Fig. 1 (and 2), the lip 26 is located relative to the nozzle part 6 in an initial position in which it extends perpendicularly to the bottom portion 12 of the nozzle part 6 and away from the rest of the box 1. The box 1, inclusive of the lip 26, can hence be injection moulded using simple dies and handling. In the initial position of the lip 26, the nozzle part 6 can be pivoted to the position within the space 24 which is shown in Fig. 2. For this, a clearance between the bottom portions 2 and 12 at the lip 26 has suitable, yet minimally possible dimensions, and/or the bottom portion 12, during the said passage, can elastically deform somewhat and the lip 26 can bend elastically in the direction of the bottom portion 12 so as to be able to pass the bottom portion 12.

Although the integrated hinged portion 28, as already stated, is elastic, it intrinsically has some stiffness. Consequently, when the nozzle part 6 is pivoted from the position shown in Fig. 2 to that of Fig. 3, the free end of the lip 26 will slide over the bottom portion 2, so that the lip 26 pivots out of its initial position to a position in which it lies against the bottom portion 2. In other words, in the situation of Fig. 3, the position of the lip 26 against the bottom portion 2 will be maintained in all orientations of the box 1. The use of the box 1 is thereby simplified.

At the free edge of the bottom portion 12, and preferably at a greatest possible distance from the hinged portion 8, the bottom portion has a cam 30. The cam 30 has such dimensions, which are defined in dependence on the thicknesses 31 and 32 of the bottom portions 2 and 12 and a clearance between them, respectively, that a significant force has to be exerted in order to pivot the bottom portion 12 from the configuration shown in Fig. 1 into the space 24 of the box 1.

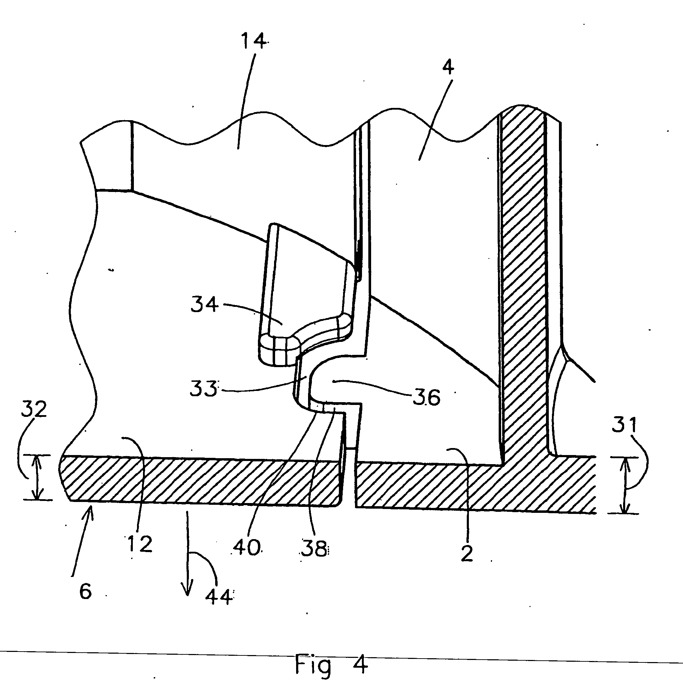

As shown in greater detail also in Fig. 4, the bottom portion 12 of the nozzle part 6 has a recess 33 at the free edge of the bottom portion 12 and close to a transition between the bottom portion 12 and the wall portion 14 of the nozzle part 6 a recess 33. A portion of the recess 33, which lies against the transition between the bottom portion 12 and the wall portion 14, is covered by a cover 34 provided on the bottom portion 12. The bottom portion 2 of the box 1 has a cam 36, which projects into the recess 33 when the nozzle part 6 is in a position, relative to the rest of the box 1, in which the bottom portions 2 and 12 are substantially parallel, as shown in Figs. 1, 3 and 4. In this position of the nozzle part 6, the mutually opposite sides 38 and 40 of the cam 36 and the recess 33, respectively, which are situated the farthest away from the second wall portion 14 are at some distance apart. This distance, the thicknesses 31 and 32 of the respective bottom portions 2 and 12, and the positions of main sides of the bottom portions 2 and 12 are such that pivoting of the nozzle part 6 further outwards about the hinge 8 in the direction denoted by the arrow 44 in Fig. 4 is prevented by the fact that the walls 38 and 40 then butt one against the other.

In the wall 4, the box 1 has ports 46, each having an opening 48. When a port 46 is not in use, the opening 48 thereof can be covered by a cover plate (not shown) slid into the port 46. A port 46 is suitable for allowing to have slid into it a nozzle part with a nozzle in which a tube can be inserted. A port 46 is also suitable for having a coupling piece slid into it and into a port 46 of another box 1, for coupling the boxes. Ports 46, nozzle parts and coupling pieces of this kind are known from NL6705628.

The box 1 consists of plastic and is produced by means of injection moulding. During the injection moulding, the box 1 acquires the configuration shown in Fig. 1, that is to say that the lip 26 extends perpendicularly to the bottom, outside the space 24 of the box to be formed. The box 1 can thus be formed without the use of complex dies and time-consuming handling.

Following the injection moulding of the box 1 with the position of the nozzle part 6 which is shown in Fig. 1, the nozzle part 6, as the said significant force is exerted via the cam 30, is pivoted about the hinge 8 and then sufficiently far onward that the nozzle part 6 is located fully inside the space 24, so that that configuration of the box 1 which is shown in Fig. 2 is reached. As the bottom portion 12 is pivoted via the cam 30, the bottom portion 12 will flexibly deform. In the thus acquired configuration according to Fig. 2, the box 1 has no portions projecting outside the space 24 to be formed from this configuration. Hence, this configuration is optimally favourable for storage, transport and use prior to the installation of the box 1 in a wall.

When the box 1 is installed in a hole in a hollow wall, a tube (not shown), in particular a flexible tube, of an electrical installation is pulled out of the wall via the hole and the end of the tube is inserted, in the direction denoted by the arrow 50 of Fig. 2, into the nozzle 16 of the nozzle part 6 still located in the space 24 of the box 1. Then the assembly of the box 1 and the tube is placed into the hole in the wall. After this, the nozzle part 6 is pushed sufficiently far out of the space 24 of the box 1 that the configuration shown in Fig. 3 is reached. As already described above, pushing of the nozzle part further outwards is prevented by the action of the cam 36, a wall 38 of which will butt against an opposite-situated wall 40 of the bottom portion 12.

Following the installation of the box 1, with the tube inserted therein, in the hollow wall, the tube could exert a force upon the nozzle part, for example by the tube pressing against resilient insulation material. The cam 30 prevents the nozzle part 6 from being accidentally pivoted in the space 24 of the box 1. Depending on the thicknesses 31 and 32 of the respective bottom portions 2 and 12 and a clearance therebetween, this function of the cam 30 can also be provided by the bottom portions 2 and 12 themselves.

Following installation in a hole in a wall, it may sometimes be required to take the box 1 back out of the hole, for example when an extra tube needs to be inserted into a nozzle 16 of the box 1 or when a tube already inserted in one nozzle 16 has to be inserted into another nozzle 16 and has in that case possibly to be swapped with another tube. It is then necessary for a fitter to be able to pivot the nozzle part 6 sufficiently far back about the hinge 8 in the box that a configuration of the box 1 acquired thereby can be pulled through the hole in the wall. In order to make this possible, the bottom portion 12 of the nozzle part 6 is provided with the lip 26. The fitter can grab hold of the lip 26 and then, as the lip 26 pivots about the hinge 28, he can pull the lip 26 towards him, so that the bottom portion 2, and hence the nozzle part 6 as a whole, pivots about the hinge 8 in the box 1. It is pointed out that the invention is not limited to the described embodiment of the box 1, but rather that persons skilled in the art may be able to produce variants within the scope of the invention defined by the appended claims. The cam 30 or an extra cam can extend, for example, perpendicularyl from the underside of a bottom portion 2 or 12, so that this cam can fulfil the same function as the cam 36, namely the pivoting of the nozzle part 6 farther out of the space 24 than the configuration shown in Fig. 3. For the fulfilment of the same functions, such cams could also be fitted along the edge of the bottom portion 12 of the nozzle part 6.

## Claims

1. Box (1), suitable for fitting in a hole in a hollow wall, comprising a bottom (2, 12) and a wall (4, 14), which define a space (24) suitable for allowing material of an electrical installation to be fitted therein, wherein the bottom comprises first (2) and second (12) bottom portions and the wall comprises first (4) and second (14) wall portions, a nozzle 16 extends from an outer side of the second wall portion (14), which nozzle is suitable for allowing a tube of the electrical installation to be inserted therein, and the first and second wall portions, at a distance from the bottom, are integrated via a hinged portion (8) having an axis parallel to the bottom, so that the second bottom portion (12) and the second wall portion (14) with the nozzle (16) form a nozzle part (6) which is pivotable relative to the rest of the box, **characterized in that** the bottom portions (2, 12) are substantially complementary portions of the bottom, and the bottom portions (2, 12) comprise along their free edges locations of such dimensions that, when the bottom portions (2, 12) extend substantially in one and the same plane, the bottom portions (2, 12) secure each other.

2. Box (1) according to claim 1, **characterized in that** the dimensions of the securing locations of the bottom portions (2, 12) are such that, given a previously effected securement of the bottom portions (2, 12), the manual application of a certain force to the bottom portions causes the bottom portions to pivot sufficiently far and flexibly about each other's axis that the securement is released.

3. Box (1) according to claim 2, **characterized in that** a securing location of the bottom portions (2, 12) is a location with such thicknesses (31, 32) of the bottom portions (2) that, during a release of an effected securement of the bottom portions (2, 12), the bottom portions (2, 12) butt one against the other in the securing locations.

4. Box (1) according to claim 3, **characterized in that** a securing location comprises a local thickening of a bottom portion (2, 12).

5. Box (1) according to claim 4, **characterized in that** the local thickening is formed by a cam (30) extending perpendicularly to the bottom.

6. Box (1) according to one of claims 2 to 5, **characterized in that** a securing location of the bottom portions (2, 12) comprises a cam (36) and a recess (33), which close to a transition between the second bottom portion (12) and the second wall portion (14), on sides of the bottom portions which can be placed opposite one another and define the thicknesses of the bottom portions, are formed in the plane of the bottom portions such that, during the release of an effected securement of the bottom portions (2, 12), farthest portions (38, 40) of the sides of the cam (36) and the recess (33) butt one against the other.

7. Box (1) according to any preceding claim, **characterized in that** on the second bottom portion (12) a lip (26) is formed, the second bottom portion (12) and the lip (26) being integrated via a hinged portion (28) having an axis parallel to the axis of the hinged portion (8) of the wall, and the lip (26) and the bottom portions (2, 12) next to the lip being formed such that, in an initial position of the lip, the lip extends perpendicularly to the bottom portion (12) of the nozzle part (6) and away from an inner side of the nozzle part (6), and the lip (26), substantially in the initial position thereof, can pass along the first bottom portion (2).

8. Box (1) according to claim 7, **characterized in that** the lip (26) is formed at a greatest possible distance from the axis of the hinged portion (8) of the wall (4, 14).

9. Box (1) according to claim 7 or 8, **characterized in that** the hinged portion (28) integrated with the lip (26) is formed such that it forces the lip to its initial position relative to the nozzle part (6).

## Patentansprüche

1. Kasten (1), geeignet zum Einbau in ein Loch in einer hohlen Wand, mit einem Boden (2, 12) und einer Wand (4, 14), welche einen Raum (24) bilden, in den Material einer elektrischen Installation eingebaut werden kann, wobei der Boden einen ersten (2) und einen zweiten (12) Bodenbereich umfasst und die Wand einen ersten (4) und einen zweiten (14) Wandbereich umfasst, sich ein Stutzen (16) von einer Außenseite des zweiten Wandbereichs (14) aus erstreckt, wobei in den Stutzen ein Rohr der elektrischen Installation eingesetzt werden kann, und der erste und zweite Wandbereich in einem Abstand vom Boden über einen Schwenkbereich (8) mit einer zum Boden parallelen Achse einstückig verbunden sind, so dass der zweite Bodenbereich (12) und der zweite Wandbereich (14) mit dem Stutzen (16) einen Stutzenteil (6) bilden, welcher relativ zu dem Rest des Kastens schwenkbar ist, **dadurch gekennzeichnet, dass** die Bodenbereiche (2, 12) im Wesentlichen komplementäre Bereiche des Bodens sind und die Bodenbereiche (2, 12) entlang ihrer freien Kanten Stellen mit solchen Abmessungen aufweisen, die, wenn sich die Bodenbereiche (2, 12) im Wesentlichen in ein und derselben Ebene erstrecken, die Bodenbereiche (2, 12) einander festhalten.

2. Kasten (1) nach Anspruch 1, **dadurch gekennzeichnet, dass** die Abmessungen der Befestigungsstellen der Bodenbereiche (2, 12) derart sind, dass, bei vorheriger bewirkter Befestigung der Bodenbereiche (2, 12), die manuelle Beaufschlagung mit einer bestimmten Kraft auf die Bodenbereiche, die Bodenbereiche dazu veranlasst, sich ausreichend weit und flexibel um ihre Achsen zu drehen, damit die Befestigung gelöst wird.

3. Kasten (1) nach Anspruch 2, **dadurch gekennzeichnet, dass** eine Befestigungsstelle der Bodenbereiche (2, 12) eine Stelle mit einer solchen Dicke (31, 32) der Bodenbereiche (2) ist, dass während einer Freigabe einer gemachten Befestigung der Bodenbereiche (2, 12) die Bodenbereiche (2, 12) an den Befestigungsstellen aneinanderstoßen.

4. Kasten (1) nach Anspruch 3, **dadurch gekennzeichnet, dass** eine Befestigungsstelle eine lokale Verdickung eines Bodenbereichs (2, 12) umfasst.

5. Kasten (1) nach Anspruch 4, **dadurch gekennzeichnet, dass** die lokale Verdickung durch eine Wulst (30) gebildet wird, die sich senkrecht zum Boden erstreckt.

6. Kasten (1) nach einem der Ansprüche 2 bis 5, **dadurch gekennzeichnet, dass** eine Befestigungsstelle der Bodenbereiche (2, 12) eine Wulst (36) und eine Aussparung (33) umfasst, die nahe eines Übergangs zwischen dem zweiten Bodenbereich (12) und dem zweiten Wandbereich (14), auf Seiten der Bodenbereiche, welche einander gegenüber angeordnet werden können, und die Dicke der Bodenbereiche bilden, in der Ebene der Bodenbereiche ausgebildet sind, derart, dass während der Freigabe einer gemachten Befestigung der Bodenbereiche (2, 12) die entferntesten Bereiche (38, 40) der Seiten der Wulst (36) und der Aussparung (33) aneinander anstoßen.

7. Kasten (1) nach einem vorhergehenden Anspruch, **dadurch gekennzeichnet, dass** auf dem zweiten Bodenbereich (12) eine Lippe (26) ausgebildet ist, wobei der zweite Bodenbereich (12) und die Lippe (26) über einen Gelenkbereich (28) mit einer Achse parallel zur Achse des Schwenkbereichs (8) der Wand, einstückig ausgebildet sind, und die Lippe (26) und die Bodenbereiche (2, 12), die der Lippe am nächsten sind, derart ausgebildet sind, dass sich die Lippe, in einer Ausgangsposition der Lippe, senkrecht zu dem Bodenbereich (12) des Stutzenteils (6) und weg von einer Innenseite des Stutzenteils (6) erstreckt und sich die Lippe (26) im Wesentlichen in der Ausgangsposition derselben entlang des ersten Bodenbereichs (2) bewegen kann.

8. Kasten (1) nach Anspruch 7, **dadurch gekennzeichnet, dass** die Lippe (26) in einem größtmöglichen Abstand von der Achse des Gelenkbereichs (8) der Wand (4, 14) ausgebildet ist.

9. Kasten (1) nach Anspruch 7 oder 8, **dadurch gekennzeichnet, dass** der Gelenkbereich (28) mit der Lippe (26) derart einstückig ausgebildet ist, dass dieser die Lippe relativ zum Stutzenteil (6) in ihre Anfangsposition drückt.

## Revendications

1. Boîtier (1), approprié pour être fixé dans un trou dans une paroi creuse, comprenant un fond (2, 12) et une paroi (4, 14), qui définissent un espace (24) approprié pour permettre de fixer un matériel d'une installation électrique, dans lequel le fond comprend des première (2) et deuxième (12) parties de fond et la paroi comprend des première (4) et deuxième (14) parties de paroi, une tuyère (16) s'étend à partir d'un côté externe de la deuxième partie de paroi (14), laquelle tuyère est appropriée pour permettre d'insérer un tube d'installation électrique à l'intérieur de cette dernière, et les première et deuxième parties de paroi, à une certaine distance du fond, sont intégrées via une partie articulée (8) ayant un axe parallèle au fond, de sorte que la deuxième partie de fond (12) et la deuxième partie de paroi (14) avec la tuyère (16) forment une partie de tuyère (6) qui peut pivoter par rapport au reste du boîtier,
**caractérisé en ce que** les parties de fond (2, 12) sont des parties sensiblement complémentaires du fond, et les parties de fond (2, 12) comprennent le long de leurs bords libres, des emplacements de dimensions telles que lorsque les parties de fond (2, 12) s'étendent sensiblement dans un seul et même plan, les parties de fond (2, 12) se fixent entre elles.

2. Boîtier (1) selon la revendication 1, **caractérisé en ce que** les dimensions des emplacements de fixation des parties de fond (2, 12) sont telles que, étant donné une fixation préalablement effectuée des parties de fond (2, 12), l'application manuelle d'une certaine force sur les parties de fond amène les parties de fond à pivoter suffisamment loin et de manière flexible autour de chacun des autres axes pour que la fixation soit libérée.

3. Boîtier (1) selon la revendication 2, **caractérisé en ce que** l'emplacement de fixation des parties de fond (2, 12) est un emplacement avec des épaisseurs (31, 32) telles des parties de fond (2) que, pendant une libération d'une fixation effectuée des parties de fond (2, 12), les parties de fond (2, 12) viennent en butée l'une contre l'autre dans les emplacements de fixation.

4. Boîtier (1) selon la revendication 3, **caractérisé en ce qu'**un emplacement de fixation comprend un épaississement local d'une partie de fond (2, 12).

5. Boîtier (1) selon la revendication 4, **caractérisé en ce que** l'épaississement local est formé par une came (30) s'étendant perpendiculairement par rapport au fond.

6. Boîtier (1) selon l'une quelconque des revendications 2 à 5, **caractérisé en ce qu'**un emplacement de fixation des parties de fond (2, 12) comprend une came (36) et un évidement (33), qui près d'une transition entre la deuxième partie de fond (12) et la deuxième partie de paroi (14), sur des côtés des parties de fond qui peuvent être placées à l'opposé l'une de l'autre et définissent les épaississements des parties de fond, sont formées dans le plan des parties de fond de sorte que, pendant la libération d'une fixation effectuée des parties de fond (2, 12), les parties les plus éloignées (38, 40) des côtés de la came (36) et de l'évidement (33) viennent en butée l'une contre l'autre.

7. Boîtier (1) selon l'une quelconque des revendications précédentes, **caractérisé en ce que** sur la deuxième partie de fond (12), une lèvre (26) est formée, la deuxième partie de fond (12) et la lèvre (26) étant intégrées via une partie articulée (28) ayant un axe parallèle à l'axe de la partie articulée (8) de la paroi, et la lèvre (26) et les parties de fond (2, 12) à côté de la lèvre, étant formées de sorte que, dans une position initiale de la lèvre, la lèvre s'étend perpendiculairement à la partie de fond (12) de la partie de tuyère (6) et détournée d'un côté interne de la partie de tuyère (6), et la lèvre (26), sensiblement dans sa position initiale, peut passer le long de la première partie de fond (2).

8. Boîtier (1) selon la revendication 7, **caractérisé en ce que** la lèvre (26) est formée à la plus grande distance possible de l'axe de la partie articulée (8) de la paroi (4, 14).

9. Boîtier (1) selon la revendication 7 ou 8, **caractérisé en ce que** la partie articulée (28) intégrée avec la lèvre (26), est formée de sorte qu'elle force la lèvre dans sa position initiale par rapport à la partie de tuyère (6).
